# NOUVEAU FASCICULE DE BREVET EUROPEEN

(11) **EP 2 021 840 B2**
(45) Date de publication et mention de la décision concernant l'opposition: **21.09.2022**
(45) Mention de la délivrance du brevet: 22.08.2018
(21) Numéro de dépôt: 07765984.5
(22) Date de dépôt: 02.05.2007
(51) Int. Cl.: G02B 5/18, G02B 5/32, B41M 3/14, G03H 1/26

(54) **COMPOSANT OPTIQUE DE MARQUAGE DE SÉCURITÉ, PROCÉDÉ DE FABRICATION D'UN TEL COMPOSANT, SYSTÈME COMPRENANT UN TEL COMPOSANT ET LECTEUR POUR LE CONTRÔLE D'UN TEL COMPOSANT**
OPTISCHE SICHERHEITSMARKIERUNGSKOMPONENTE, VERFAHREN ZUR HERSTELLUNG EINER SOLCHEN KOMPONENTE, SYSTEM MIT EINER SOLCHEN KOMPONENTE UND LESEGERÄT ZUR ÜBERPRÜFUNG EINER SOLCHEN KOMPONENTE
OPTICAL SECURITY MARKING COMPONENT, METHOD OF MANUFACTURING SUCH A COMPONENT, SYSTEM COMPRISING SUCH A COMPONENT, AND READER FOR CHECKING SUCH A COMPONENT

(30) Priorité: 02.05.2006 FR 0651571; 02.05.2007 FR 0754814
(43) Date de publication de la demande: 11.02.2009
(73) Titulaire: SURYS, 77607 Marne-la-Vallée Cedex 3 (FR)
(72) Inventeur: PETITON, Valéry, F-77440 Vendrest (FR); NOIZET, Alexandre, F-77000 Vaux Le Penil (FR)
(74) Mandataire: Bouvier, Thibault
(86) Numéro de dépôt international: PCT/FR2007/051201
(87) Numéro de publication internationale: WO 2007/125266

(56) Documents cités:
- EP-A- 1 650 587
- WO-A1-02/00445
- WO-A1-03/027952
- WO-A1-2004/083911
- WO-A1-2004/095090
- WO-A2-03/084764
- US-B2- 6 909 547
- GALE M T ET AL: "ZERO-ORDER DIFFRACTIVE MICROSTURCTURES FOR SECURITY APPLICATIONS" PROCEEDINGS OF THE SPIE, SPIE, BELLINGHAM, VA, US, vol. 1210, 15 janvier 1990 (1990-01-15), pages 83-89, XP000987077 ISSN: 0277-786X

## Description

La présente invention concerne un composant d'imagerie optique de sécurité visant à la réalisation de clés de contrôle optiques intégrables dans une DOVID (Diffractive Optical Variable Image Device) et ne pouvant être authentifié que par l'instrument de lecture approprié.

Ce composant optique de marquage est dédié à l'authentification d'un produit ou d'un document sur lequel ce composant optique de sécurité est apposé.

Il concerne la famille générale des composants optiques formés par estampage de réseaux de diffraction dans une couche thermoformable supportée par un film transparent.

En fonction de paramètres d'observation (orientation par rapport à l'axe d'observation, position et dimensions de la source lumineuse, ...), les effets optiques produits par le composant optique de sécurité prennent des configurations très caractéristiques et vérifiables. Le but général de ces composants optiques est de fournir des effets nouveaux et différenciés, à partir de configurations physiques du film difficilement reproductibles, voire difficilement analysables.

Parmi cette famille de composant optiques formés par estampage de films transparents, l'état de la technique le plus proche est le brevet américain US6909547.

Ce brevet décrit un élément de sécurité, obtenu à partir d'un stratifié plastique et présentant un motif en mosaïque constitué d'éléments de surface. Ce stratifié présente une structure de diffraction {B(x, y, T)}, produite à partir d'une superposition :
- d'une première structure à basse fréquence {G(x, y)} et
- d'une structure en relief à haute fréquence {R(x, y)}.

Le film présente deux zones produisant des effets optiques distincts.

Dans un premier élément de surface, les vecteurs des 2 structures {G(x, y)} et {R(x, y)} sont parallèles.

Dans l'autre élément de surface, les 2 vecteurs présentent un angle sensiblement droit.

Les vecteurs des structures {G(x, y)} sont également parallèles dans les deux éléments de surface. Un bord commun des deux éléments de surface n'est visible que sous une lumière polarisée linéairement. À la lumière du jour, ces deux éléments de surface présentent la même luminosité surfacique.

L'observation de ce composant optique de sécurité selon l'art antérieur se traduit par deux aspects bien différenciés, avec une inversion de contraste en fonction de l'orientation d'un polariseur interposé entre l'oeil de l'observateur et le composant optique. En procédant à une rotation relative de 90°, l'élément graphique lumineux devient sombre, et inversement.

L'inconvénient est qu'en l'absence de polariseur, l'observation du composant optique ne permet pas de déceler les structures à haute fréquence. Ainsi donc, une contrefaçon efficace serait aisément réalisée par l'utilisation d'un réseau basse fréquence sur toute la surface.

Un autre inconvénient de la structure proposée réside dans le fait qu'elle est intrinsèquement très sensible aux conditions d'observations qui dépendent de la source et de la position de l'observateur. En effet, la structure décrite dans les antériorités se limite uniquement à des effets qui apparaissent dans le plan d'incidence.

On connaît également dans l'état de la technique le brevet EP1650587 qui décrit un composant optique de marquage pour la lutte anti-contrefaçon, produisant une première configuration visible selon une observation à travers un polariseur orienté selon une première direction, et une deuxième configuration visible lors d'une observation à travers le polariseur orienté selon une seconde direction.

Le composant selon ce brevet comprend un film estampé pour former deux réseaux diffractants présentant des orientations distinctes. L'un des réseaux présente une période plus petite que la moitié de la longueur d'onde.

Un tel composant ne donne pas totalement satisfaction car en présence d'un éclairage ambiant, la lisibilité des deux configurations est altérée.

Le but de la présente invention est de remédier à ces inconvénients en proposant un composant optique de sécurité vérifiable par l'interposition d'un polariseur, présentant en outre une configuration discernable en lumière ambiante, non polarisée, et par nature plus tolérante aux conditions d'observation de l'effet polarisé. L'objet de l'invention est défini par les revendications en annexe. À cet effet, l'invention concerne un composant optique de marquage de sécurité produisant une première configuration visible lors d'une observation à travers un polariseur orienté selon une première orientation, et une deuxième configuration distincte de la première, visible lors d'une observation à travers un polariseur orienté selon une seconde orientation ; le composant optique comprenant un film estampé pour former au moins deux réseaux diffractants présentant des orientations distinctes, tel que chacun desdits réseaux présente un pas inférieur à 550 nm, et une modulation comprise entre 0,25 et 0,5 par rapport à un plan de référence. De préférence, la modulation est comprise entre 0,4 et 0,5 par rapport à un plan de référence.

Avantageusement, chacun des réseaux est formé dans une configuration graphique prédéfinie, de dimensions visibles, les réseaux présentant des limites adjacentes.

Selon un premier mode de mise en oeuvre, le traitement diffusant est constitué par une couche diffusante déposée sur les couches optiques.

Selon un deuxième mode de mise en oeuvre, le traitement diffusant est intégré à la structure sub-longueur d'ondes.

Selon un premier mode de réalisation, le composant comporte un film transparent estampé recouvert d'une couche réflective métallique.

Selon un deuxième mode de réalisation, la couche réflective est constituée d'un matériau transparent à haut indice de réfraction.

Selon un autre mode de mise en oeuvre, la structure résultante (réseau sub-longueur d'onde combiné à la structure diffusante) est encapsulée entre 2 couches d'indices optiques différents (un haut indice et un bas indice de réfraction). Ce mode de mise en oeuvre présente l'avantage de permettre un contrôle visuel immédiat sans outil spécifique.

De préférence, la couche réflective est enduite d'un adhésif pour l'apposition sur un support à authentifier.

Avantageusement, le film estampé est constitué d'un matériau biréfringent transparent.

L'invention concerne également un procédé de fabrication d'un composant optique de marquage de sécurité selon l'une des revendications 1 à 7, produisant une première configuration visible lors d'une observation à travers un polariseur orienté selon une première orientation, et une deuxième configuration distincte de la première, visible lors d'une observation à travers le polariseur orienté selon une seconde orientation ; le composant optique comprenant un film estampé pour former au moins deux réseaux diffractants présentant des orientations distinctes, chacun desdits présentant une période inférieure à 550 nm, et une modulation comprise entre 0,25 et 0,5 par rapport à un plan de référence; le composant comprenant en outre un traitement diffusant, tel que ledit traitement diffusant comprend une étape d'enregistrement, sur une même région d'un matériau photosensible insolé pour former un réseau sub longueur d'onde et une structure de type « speckle »; puis une étape de réplication de la structure sur un matériau thermoformable pour former une couche présentant une modulation du relief correspondant à la structure enregistrée sur laquelle est ensuite formé un dépôt de couches minces métallique ou diélectrique, puis un revêtement par un vernis de protection et une couche adhésive.

L'invention sera mieux comprise à la lecture de la description qui suit, concernant des exemples non limitatifs de réalisation où :
- la figure 1 représente une vue schématique d'un réseau diffractant mise en oeuvre par l'invention ;
- les figures 2 à 4 représentent le composant observé sous différentes configurations d'observation ;
- la figure 5 représente une vue en coupe d'un composant selon l'invention ;
- les figures 6 à 8 représentent des vues respectivement de dessus, de la partie mobile et en coupe d'un lecteur ne faisant pas partie de la présente invention ;
- les figures 9 et 10 représentent des vues du composant vu à travers le lecteur sous deux positions de la partie mobile ;
- la figure 11 représente une vue en coupe d'une variante d'un lecteur ;
- la figure 12 représente une vue schématique du cône de diffusion par rapport à la direction de la lumière incidente ;
- la figure 13 représente la courbe de l'intensité lumineuse en fonction de l'écart à la position dans le cas standard et selon la structure encapsulée ;
- la figure 14 représente la vue en coupe d'un tel composant, comprenant une structure encapsulée, une couche de vernis coloré et une couche adhésive ;
- la figure 15 représente une vue 3D de la nouvelle structure en surface à 2 grossissements différents ;
- la figure 16 représente une vue schématique d'une variante d'un composant optique selon l'invention ;
- la figure 17 illustre un autre mode de réalisation avec deux structures, deux couleurs et deux intensités lumineuses.

Avantageusement, il sera utilisé des réseaux dont la période est inférieure à 300 nm pour la réalisation d'un composant optique de sécurité semi-caché. Ces réseaux sont caractérisés par le fait que la diffraction dans le domaine du visible est très limitée : l'ordre 1 est à peine visible en observation lumière rasante.

Ces réseaux présentent des caractéristiques optiques particulières non visibles à l'oeil nu, mais simplement contrôlables à l'aide d'un filtre polariseur. Les réseaux mis en oeuvre par l'invention présentent une période inférieure à la longueur d'onde (typiquement 550 nm pour le visible) et une forte modulation (comprise entre 0.25 et 0.5) de telle sorte que la lumière incidente est absorbée dans sa quasi-totalité. Seule la lumière dont la direction de polarisation est perpendiculaire au vecteur réseau est diffractée. La lumière diffractée par ce type de réseaux est donc polarisée.

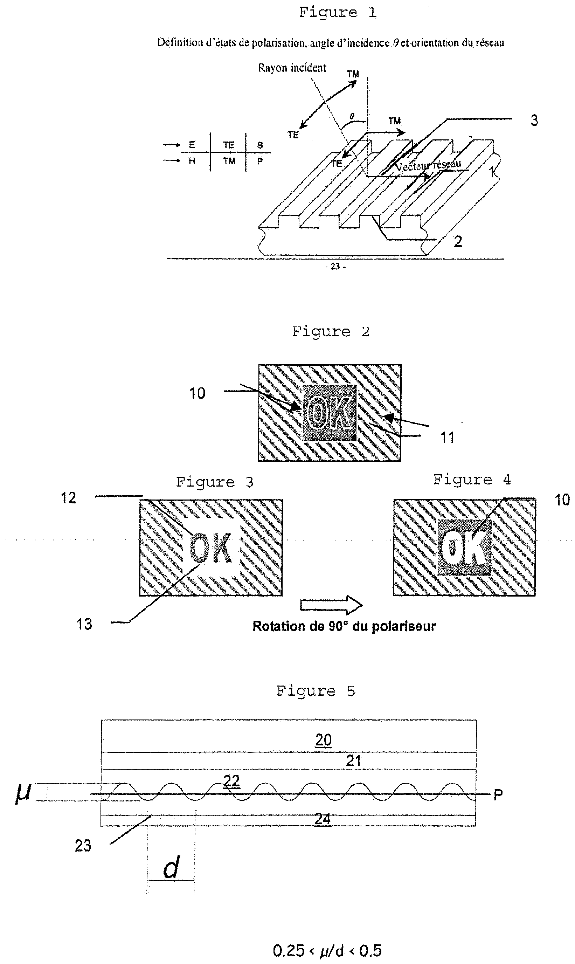

La figure 1 représente une vue d'un tel réseau, présentant des alternances de bosses (1) et de creux (2) allongés pour former un réseau orienté selon un vecteur (3).

La lumière polarisée selon le mode TM est absorbée alors que la composante polarisée selon le mode TE est seule réfléchie.

Seule la lumière diffractée à l'ordre zéro est polarisée, mais l'effet de polarisation n'est pas observable sur les ordres supérieurs.

Le réseau est formé par estampage dans un film polyester, destiné à la fabrication d'hologrammes, recouvert d'une couche de matériau estampable dans laquelle on vient transférer les nanostructures. La couche estampée est ensuite recouverte par exemple par évaporation sous vide d'une couche réflective métallique, puis enduite d'un adhésif adapté au produit à réaliser (adhésif à froid pour les étiquettes, adhésif à chaud pour les films de laminage ou de transfert à chaud).

Ce composant comprend des réseaux précités utilisés pour réaliser une clé de contrôle intégrée par juxtaposition ou insertion dans un DOVID (Diffractive Optical Variable Image Device). Ces réseaux ne sont en aucun cas utilisés en superposition avec un des éléments diffractants du DOVID. Une légère trace est donc visible à la surface laissant deviner l'empreinte de la clé de contrôle.

Le lecteur est constitué de filtres polariseurs permettant de révéler l'information.

L'ensemble permet la mise en place d'un élément de sécurité au sein d'une image holographique.

D'un point de vue graphique, les réseaux sub-longueur d'ondes seront utilisés par pairs s'imbriquant l'un dans l'autre pour dessiner des effets de positif/négatif, des effets de multiplexage ou tout autre effet approprié utilisant aussi bien des éléments de textes que des éléments graphiques.

En particuliers les réseaux peuvent êtres utilisés pour inscrire des codes binaires lisibles en machine.

Les figures 2 à 4 représentent un exemple de réalisation d'un composant selon l'invention.

Le composant optique est une structure de type DOVID (11) avec une zone formant la clé de contrôle (10). Cette zone présente une première configuration (figure 2) lorsqu'elle est observée en lumière ambiante non-polarisée et deux configurations en contraste inversé (figures 3 et 4) lorsqu'elle est observée à travers un polariseur orienté respectivement selon une première orientation et une seconde orientation.

La zone (12) présente un réseau de pas inférieur à 550 nanomètres avec un vecteur d'orientation selon une première direction. La forme de cette zone (12) désigne les caractères « OK ». La zone (13) présente un réseau de pas inférieur à 550 nanomètres avec un vecteur d'orientation perpendiculaire à la première direction. La forme de cette zone (12) désigne une surface complémentaire carrée aux caractères « OK ».

En lumière ambiante, la forme des deux zones (12) et (13) reste visible et constitue un mode de reconnaissance additionnel.

La figure 5 représente un schéma de coupe du composant réalisé sous la forme d'une étiquette destructible ou marquage à chaud.

Le composant comprend :
- une couche support (20) formé par un film en matière plastique. Cette couche est destinée au support du composant au moins jusqu'à son transfert sur le document ou sur le produit à authentifier,
- une couche de détachement (21), optionnelle, permettant de séparer le composant de la couche support au moment de son apposition sur un produit dans le cas d'un produit de laminage ou de marquage à chaud,
- une couche holographique estampée (22) transparente,
- un revêtement (23) réfléchissant pouvant être métallique ou transparent à haut indice de réfraction,
- une couche adhésive (24).

La couche holographique estampée présente une déformation telle que : 0,25<µ/d<0,5
Où d désigne le pas du réseau
Et µ est une caractéristique du réseau comprise entre 0,25 et 0, 5 et de préférence entre 0,4 et 0,5.

Comme les produits connus dans l'art antérieur, l'objet de l'invention peut-être intégré dans des produits permettant la réalisation d'étiquettes, ou de film de marquage à chaud, ou bien encore de laminage.

Une partie de la couche holographique (23) peut être démétallisée, cette démétallisation pouvant se superposer avec la structure exposée.

La couche réflective est une couche métallique (typiquement aluminium, cuivre, chrome). Il est également possible d'employer un matériau transparent à haut indice de réfraction tel que ZnS, TiO2.

Par combinaison avec la démétallisation, il est également possible d'obtenir des composants optiques présentant de multiples aspects (aluminium, Cuivre, Transparent, ...) sans créer de discontinuité de la clé de contrôle.

Dans un mode de réalisation particulier, les vecteurs réseaux sont alignés avec les axes neutres des matériaux biréfringents transparents utilisés comme support de l'étiquette (type BOPP). Cet alignement permet d'optimiser l'efficacité de l'effet optique transféré sur le support.

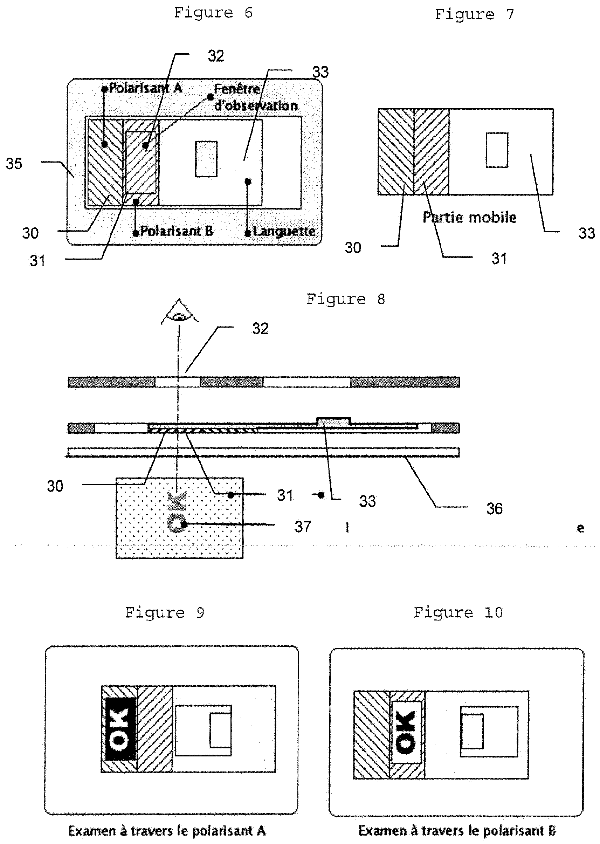

Les figures 6 à 10 représentent des vues d'un lecteur ne faisant pas partie de la présente invention pour le contrôle d'un composant selon l'invention.

Le lecteur fonctionne à partir des principes suivants :
- observation de la lumière réfléchie par la surface de la clé de contrôle (réflexion directe ou ordre 0),
- au travers d'un ou plusieurs filtres polarisants ou tout autre élément de nature biréfringente permettant de mettre en évidence la polarisation de la lumière réfléchie par la clé,
- mise en évidence d'une inversion de contraste entre les différents éléments d'image.

Le lecteur le plus simple est constitué d'un simple polariseur. Placé devant la lumière réfléchie par le réseau, il ne laisse passer que la lumière dont la direction de polarisation est parallèle à son axe principal. Une simple rotation du document contrôlé ou du lecteur permet de révéler alternativement les deux zones d'images orientées perpendiculairement.

Les figures 6 à 10 représentent un lecteur manuel optimisé (à translation). Il est constitué par un cadre (35) comportant une partie mobile (33) équipée de deux morceaux de polariseurs (30, 31) juxtaposés dont les axes principaux sont orientés perpendiculairement. L'orientation des axes de ces polariseurs est adaptée aux orientations des vecteurs réseaux. Le lecteur étant posé sur l'image de manière à observer la réflexion directe de la lumière incidente sur la clé de contrôle, un mouvement de translation permettra de visualiser une bascule entre les deux composants de l'image.

Avantageusement, un élément dépoli (36) diffusant est placé entre les polariseurs et le composant (37) à vérifier de manière à :
- réduire l'éblouissement provoqué par la source qui se réfléchit sur la clé de contrôle,
- simuler une source d'éclairage large,
- obliger la personne effectuant le contrôle à poser le lecteur sur la clé à vérifier (ergonomie/position unique /simplicité).

Les figures 9 et 10 représentent la vue du composant placé dans le lecteur lorsque la partie mobile place dans la fenêtre respectivement le premier et le second polariseur.

Une alternative de lecteur consiste en l'intégration des différents éléments dans un dispositif complètement automatisé

Cette catégorie de lecteurs regroupe des lecteurs automatiques réalisés :
- soit par rotation automatique du filtre polariseur,
- soit par translation automatique d'un chariot constitué de 2 polariseurs croisés.

Une dernière catégorie de lecteurs rassemble les lecteurs exploitant des optiques biréfringentes :
- par exemple, par l'utilisation d'un cube de Wollaston qui réalise une séparation des polarisations. Un cube de Wollaston réalise une déviation d'environ 20° entre les deux polarisations. Dans ce cas, l'observation se fait selon une vue simultanée des deux modes, qui se trouvent décalés dans un même plan d'observation.

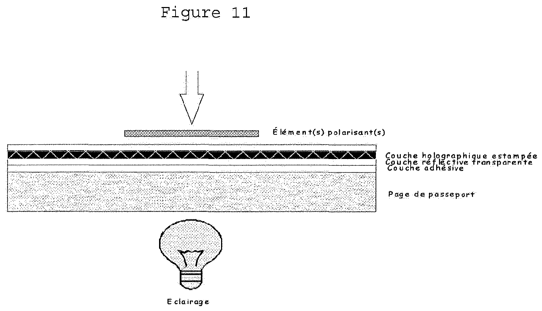

Une autre réalisation représentée en figure 11 permet la lecture par transmission.

Cette solution est adaptée pour des produits intégrés dans des films transparents tels que ceux qui sont utilisés pour la protection des mentions variables dans les documents d'identité. Tous les réseaux constituant l'image holographique sont alors recouverts d'une couche de matériau diélectrique transparent.

La vérification de la clé se fera avantageusement en éclairant le document au travers du papier. Le papier remplace alors la structure diffusante du lecteur 5b.

Une autre réalisation consiste à combiner (superposer) à l'image constituée des deux réseaux orientés perpendiculairement une structure de nature aléatoire et chaotique telles que celles qui sont utilisées pour la réalisation des effets blancs (mat ou brillant). Cette combinaison présente l'avantage d'améliorer le contraste et de modifier l'aspect de surface.

Cette combinaison revient à intégrer une partie de l'outil de contrôle (ici le diffusant du lecteur) à la clé de contrôle ce qui permet par la suite de simplifier le lecteur.

La description qui suit correspond à des exemples non limitatifs d'une telle réalisation.

La variante de réalisation qui suit à pour but d'améliorer les composants de sécurité utilisant les propriétés des réseaux sub-longueur d'onde 1D ou 2D par l'ajout d'une fonction optique diffusante : cette fonction n'est ni réfractive ni diffractive. Elle permet d'élargir le cône de visibilité des effets à l'ordre zéro, pour les rendre facilement observables autour de la réflexion spéculaire.

Cette fonction peut être superposée par empilement mécanique de couches, mais est préférentiellement intégrée directement dans la structure sub longueur d'onde.

Une solution consiste à encapsuler directement la structure résultante du couplage entre le réseau sub longueur d'onde et la fonction diffusante pour étendre l'angle d'observation de l'effet de permutation de couleur à l'ordre zéro.

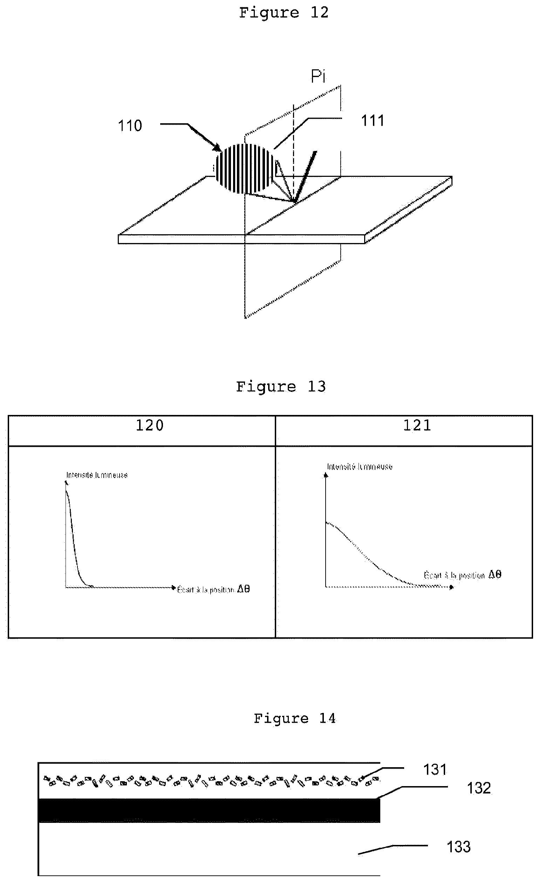

L'effet à l'ordre zéro se trouve alors dans un cône de diffusion et n'est plus limité au plan d'incidence. Il est donc moins sensible aux conditions d'éclairement et résiste mieux aux écarts de positionnement. La figure 12 représente une vue schématique du cône de diffusion (110) par rapport à la direction de la lumière incidente (111).

La figure 13 représente la courbe de l'intensité lumineuse en fonction de l'écart à la position dans le cas standard (courbe 120) et selon la structure encapsulée (courbe 121). L'angle θ représentant l'angle d'observation idéal pour des conditions d'éclairement données et Δθ l'écart par rapport à cet angle.

On observe une perte de l'intensité de la lumière réfléchie par la nouvelle structure, cependant cette lumière est étalée angulairement de part et d'autre de la position optimale.

Cette solution permet :
- d'améliorer la subjectivité de l'effet optique en rendant le composant peu sensible aux conditions d'éclairement : aussi bien sous une source ponctuelle que sous une source étendue,
- de ne pas dénaturer les couleurs perçues : conservation de la teinte et de la saturation,
- de donner un nouvel aspect non standard aux composants de sécurité utilisant ces réseaux sub longueur d'onde encapsulés,
- de faire apparaître une permutation de couleur supplémentaire : visible par une variation de l'angle d'incidence.

L'angle d'ouverture du cône dépend de la fonction diffusante utilisée. Plus les dimensions des éléments diffusants sont petites et plus l'ouverture du cône s'agrandit et inversement.

La fonction diffusante peut être isotropique (les microstructures mises en oeuvre sont symétriques en rotation et donnent un effet identique quel que soit l'angle d'azimut) ou anisotropique (dans ce cas, la structure aléatoire est orientée et n'est plus symétrique).

Cette fonction diffusante ajoute alors un degré de liberté supplémentaire pour la conception des composants de sécurité utilisant cette technique. Il conviendra d'adapter la structure à l'application recherchée (marquage à chaud, étiquette ...) et à l'effet optique recherché.

Avantageusement, un vernis coloré enduit en dessous de la structure encapsulée va améliorer la subjectivité du composant. La figure 14 représente la vue en coupe d'un tel composant, comprenant une structure encapsulée (131), une couche de vernis coloré (132) et une couche adhésive (133).

On ajoute ainsi un phénomène d'absorption à l'effet optique créé. Le couplage entre l'absorption, la diffusion et l'effet à l'ordre zéro du réseau sub longueur d'onde encapsulé donne un composant optique présentant une excellente tenue à l'angle d'observation mais aussi un aspect tout à fait nouveau. Cette combinaison unique se détache des composants à permutation de couleur connus dans l'état de la technique.

La structure en relief résultante du couplage entre le réseau sub longueur d'onde et la fonction diffusante conserve l'ensemble des propriétés des réseaux sub longueur d'onde en relief sur un métal. Cette structure va réfléchir, diffuser et polariser linéairement la lumière incidente. Cette lumière se révèle à l'aide d'un filtre polariseur.

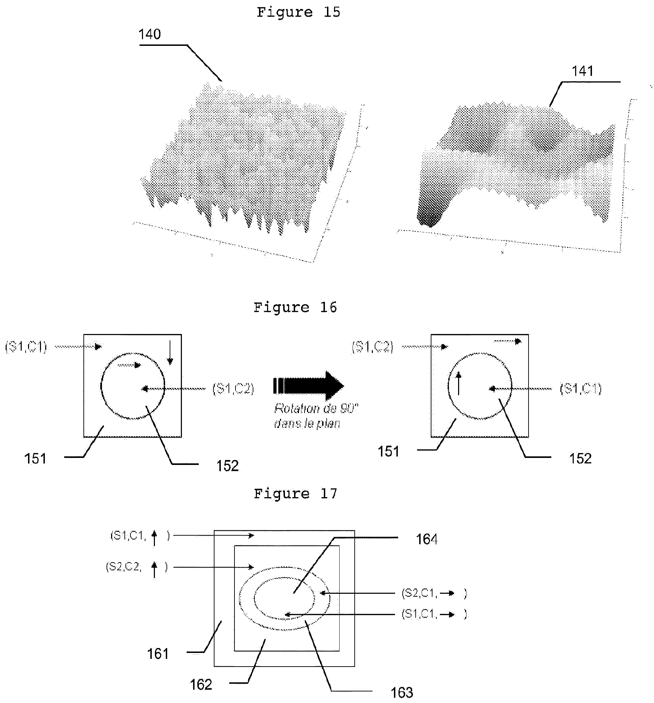

La figure 15 représente une vue 3D de la nouvelle structure en surface à 2 grossissements différents. Le facteur d'échelle entre 140 et 141 est de 7. On observe bien dans 141 la modulation de la structure diffractante par la fonction diffusante chaotique et isotrope.

Un mode de réalisation complet non limitatif d'un composant de sécurité décrit par l'invention :

### • Création de la structure

Le réseau sub longueur d'onde et une structure de type « Speckle », donc les caractéristiques physiques (tailles de grain ...) sont contrôlables, sont enregistrés par exemple par une méthode de photolithographie interférentielle sur la même région d'un matériau photosensible

D'autres technologies peuvent être utilisées pour enregistrer la structure : la gravure directe par faisceau d'électron, la microlithographie XUV ....

### • Réplication de la structure

Une copie dure de la structure est ensuite créée par un procédé de galvanoplastie en vue de la réplication de masse. Une feuille de nickel est issue de ce procédé. Elle présente en surface les nanostructures à répliquer.

Cette feuille de nickel est montée sur un cylindre chauffant qui va mouler un film thermoplastique de type PET. C'est l'étape de réplication de masse.

D'autres techniques de réplications de masse peuvent être utilisées : UV casting, UV embossing, ...

### • Dépôt du matériau diélectrique

Le matériau diélectrique utilisé comme guide d'onde est déposé par un procédé de dépôt sous vide. Plusieurs techniques de dépôts sont disponibles et conviennent parfaitement au mode de réalisation. Le paramètre influant est la couche de matériau qui, couplée avec le réseau sub longueur d'onde, va donner l'effet voulu à l'ordre zéro.

### • Enduction

Cette étape consiste à enduire un vernis qui va encapsuler la structure et un adhésif qui va permettre au composant d'être applicable sur le document à protéger.

Tous les concepts d'images disponibles par l'utilisation de cette nouvelle structure sont valables aussi bien pour les composants transparents (généralement utilisée pour la protection des documents de sécurité) que pour les composants opaques. La description des exemples suivants s'attache à détailler les effets visibles à l'oeil qui s'ajoutent aux effets visibles sous polariseur comme décrit dans la figure 2.

Le composant optique comporte dans l'exemple illustré par la figure 16 deux zones (151, 152).

Lorsque le composant est orienté selon une première direction, la zone 151 apparaît d'une première couleur C1, et la zone centrale 152 apparaît d'une deuxième couleur C2.

Lorsque le composant est tourné d'un quart de tour dans son plan, les directions d'observation et d'éclairage restant inchangées, les couleurs des zones 151 et 152 s'inversent : c'est la zone 151 qui apparaît alors de la deuxième couleur C2, et la zone intérieure 152 qui apparaît de la première couleur C1.

Le composant décrit dans cet exemple est composé de deux régions possédant la même structure mais dont les vecteurs réseaux (réseaux 1D) sont orthogonaux. Le composant présente donc toujours deux couleurs différentes C1 et C2 qui permutent par une rotation du composant de 90° dans le plan.

Il est tout à fait possible d'intégrer dans la nouvelle structure des éléments graphiques de dimension microscopique décelables grâce à un microscope optique.

Une variante de réalisation consiste, avec d'autres structures sub-longueur d'onde, à produire une image d'une seule couleur mais avec des intensités différentes. Les deux vecteurs réseaux étant parallèles et les caractéristiques des réseaux identiques, les deux régions présentent la même couleur. La fonction diffusante de la première région est différente de la fonction diffusante de la seconde région. Cette différence se traduit à l'oeil par une différence d'intensité lumineuse réfléchie comparable à un effet de Watermark visible à l'ordre zéro.

La figure 17 illustre un autre mode de réalisation avec deux structures, deux couleurs et deux intensités lumineuses.

Le composant est constitué de deux structures différentes : S1 est la structure encapsulée fortement diffusante, et correspond aux surfaces (161) et (164) et S2 est une structure sub-longueur d'onde encapsulée à faible diffusion, correspondant aux surfaces (162) et (163). Ce composant présente donc deux couleurs C1 et C2 différentes à la réflexion mais aussi deux images apparaissant par effet Watermark par différence d'intensité. Lorsque l'on opère une rotation dans le plan d'un quart de cercle, les couleurs C1 et C2 s'inversent et l'effet « Watermark » est toujours présent.

L'invention peut être utilisée dans tous les composants optiques de sécurité type hologramme présentant une couche métallique ou diélectrique, ce qui permet de combiner les avantages et niveaux de sécurité des hologrammes standard et des produits résultants de l'invention.

## Revendications

1. Composant optique de marquage de sécurité produisant une première configuration visible lors d'une observation à travers un polariseur orienté selon une première orientation, et une deuxième configuration distincte de la première, visible lors d'une observation à travers le polariseur orienté selon une seconde orientation, le composant optique comprenant un film estampé pour former au moins deux réseaux diffractants,
tel que
lesdits au moins deux réseaux diffractants sont des réseaux sub-longueur d'onde, chacun desdits réseaux présentant :
- une période inférieure à 550 nm, et une modulation comprise entre 0,25 et 0,5 par rapport à un plan de référence, et
- une structure en relief résultante d'un couplage entre ledit réseau sub longueur d'onde et une même fonction diffusante chaotique et isotrope;
Lesdits au moins deux réseaux diffractants présentant des limites adjacentes et étant orientés perpendiculairement l'un par rapport à l'autre.

2. Composant optique de marquage selon la revendication précédente, tel que chaque réseau est encapsulé entre une couche de haut indice optique et une couche de bas indice de réfraction.

3. Composant optique de marquage selon la revendication 1 ou 2, tel que chacun des réseaux est formé dans une configuration graphique prédéfinie, de dimensions visibles, les réseaux présentant des limites adjacentes, lesdits réseaux présentent des vecteurs principaux perpendiculaires.

4. Composant optique de marquage selon l'une quelconque des revendications précédentes, tel qu'il comporte un film transparent estampé recouvert d'une couche réflective métallique.

5. Composant optique de marquage selon l'une au moins des revendications précédentes, tel que ledit composant optique est partiellement démétallisé.

6. Composant optique de marquage selon l'une au moins des revendications précédentes, tel que le film estampé est constitué par un matériau biréfringent transparent.

7. Procédé de fabrication d'un composant optique de marquage de sécurité selon l'une quelconque des revendications précédentes, produisant une première configuration visible lors d'une observation à travers un polariseur orienté selon une première orientation, et une deuxième configuration distincte de la première, visible lors d'une observation à travers le polariseur orienté selon une seconde orientation ; le composant optique comprenant un film estampé pour former au moins deux réseaux diffractants présentant des orientations distinctes, chacun desdits présentant une période inférieure à 550 nm, et une modulation comprise entre 0,25 et 0,5 par rapport à un plan de référence, le composant comprenant en outre un traitement diffusant, tel que ledit traitement diffusant comprenant une étape d'enregistrement, sur une même région d'un matériau photosensible insolé pour former un réseau sub longueur d'onde, une structure de type " speckle ", puis de réplication de la structure pour former une couche diélectrique sur laquelle est ensuite formé un dépôt métallique, puis un revêtement par un vernis de protection.

## Patentansprüche

1. Optische Sicherheitsmarkierungskomponente, die eine erste Konfiguration, die bei Betrachtung durch einen Polarisator in einer ersten Ausrichtung sichtbar ist, und eine zweite, von der ersten verschiedene Konfiguration erzeugt, die bei Betrachtung durch den Polarisator in einer zweiten Ausrichtung sichtbar ist, wobei die optische Komponente einen Film umfasst, der geprägt ist, um mindestens zwei Beugungsnetze zu bilden, dergestalt, dass
die mindestens zwei Beugungsnetze Teilwellenlängennetze sind, wobei jedes der Netze Folgendes aufweist:
- eine Periode unter 550 nm und eine Modulation zwischen 0,25 und 0,5 bezüglich einer Referenzebene und
- eine Reliefstruktur, die sich aus einer Koppelung zwischen dem Teilwellenlängennetz und einer selben chaotischen und isotropen Ausbreitungsfunktion ergibt;
wobei die mindestens zwei Beugungsnetze benachbarte Grenzen aufweisen und senkrecht zueinander ausgerichtet sind.

2. Optische Markierungskomponente nach dem vorhergehenden Anspruch, dergestalt, dass jedes Netz zwischen einer Schicht mit hohem Brechungsindex und einer Schicht mit niedrigem Brechungsindex eingekapselt ist.

3. Optische Markierungskomponente nach Anspruch 1 oder 2, dergestalt, dass jedes der Netze in einer vorbestimmten grafischen Konfiguration mit sichtbaren Abmessungen gebildet ist, wobei die Netze benachbarte Grenzen aufweisen, wobei die Netze senkrecht zueinander verlaufende Hauptvektoren aufweisen.

4. Optische Markierungskomponente nach einem beliebigen der vorhergehenden Ansprüche, dergestalt, dass sie einen geprägten transparenten Film umfasst, der mit einer reflektierenden Metallschicht bedeckt ist.

5. Optische Markierungskomponente nach mindestens einem der vorhergehenden Ansprüche, dergestalt, dass die optische Komponente teilweise entmetallisiert ist.

6. Optische Markierungskomponente nach mindestens einem der vorhergehenden Ansprüche, dergestalt, dass der geprägte Film aus einem doppelbrechenden transparenten Material besteht.

7. Verfahren zur Herstellung einer optischen Sicherheitsmarkierungskomponente nach einem beliebigen der vorhergehenden Ansprüche, die eine erste Konfiguration, die bei Betrachtung durch einen Polarisator in einer ersten Ausrichtung sichtbar ist, und eine zweite, von der ersten verschiedene Konfiguration erzeugt, die bei Betrachtung durch den Polarisator in einer zweiten Ausrichtung sichtbar ist, wobei die optische Komponente einen Film umfasst, der geprägt ist, um mindestens zwei Beugungsnetze zu bilden, die unterschiedliche Ausrichtungen aufweisen, wobei jedes eine Periode unter 550 nm und eine Modulation zwischen 0,25 und 0,5 bezüglich einer Referenzebene aufweist, wobei die Komponente außerdem eine Ausbreitungsbehandlung umfasst, dergestalt, dass die Ausbreitungsbehandlung einen Schritt der Aufzeichnung in einer selben Region eines lichtausgesetzten lichtempfindlichen Materials zur Bildung eines Teilwellenlängennetzes, einer speckleartigen Struktur, dann der Vervielfältigung der Struktur zur Bildung einer dielektrischen Schicht, auf der anschließend ein metallischer Überzug gebildet wird, dann eine Beschichtung mit einem Schutzlack umfasst.

## Claims

1. Security marking optical component producing a first configuration, which may be seen when observed through a polarizer when the latter is oriented with a first orientation, and a second configuration, which is distinct from the first and which may be seen when observed through the polarizer when the latter is oriented with a second orientation, the optical component comprising a stamped film in order to form at least two diffraction gratings,
such that
said at least two diffraction gratings are subwavelength gratings, each of said gratings having:
- a period shorter than 550 nm, and a modulation comprised between 0.25 and 0.5 with respect to a reference plane; and
- a relief structure resulting from a coupling between said subwavelength grating and a given chaotic and isotropic scattering function;
said at least two diffraction gratings having adjacent limits and being oriented perpendicularly to each other.

2. Marking optical component according to the preceding claim, such that each grating is encapsulated between a high-refractive-index layer and a low-refractive-index layer.

3. Marking optical component according to Claim 1 or 2, such that each of the gratings is formed in a predefined graphical configuration, of visible dimensions, the gratings having adjacent limits, said gratings having perpendicular principal vectors.

4. Marking optical component according to any one of the preceding claims, such that it includes a stamped transparent film covered with a reflective metal layer.

5. Marking optical component according to at least one of the preceding claims, such that said optical component is partially demetallized.

6. Marking optical component according to at least one of the preceding claims, such that the stamped film is made of a transparent birefringent material.

7. Process for manufacturing a security marking optical component according to any one of the preceding claims, producing a first configuration, which may be seen when observed through a polarizer when the latter is oriented with a first orientation, and a second configuration, which is distinct from the first and which may be seen when observed through the polarizer when the latter is oriented with a second orientation; the optical component comprises a stamped film in order to form at least two diffraction gratings having distinct orientations, each of said gratings having a period shorter than 550 nm and a modulation comprised between 0.25 and 0.5 with respect to a reference plane, the component furthermore comprising a scattering treatment, such that said scattering treatment comprises a step of recording, in a given region of a photosensitive region exposed to form a subwavelength grating, a speckle-type structure, and then replicating the structure to form a dielectric layer on which is then formed a metal deposit, which is then coated with a protective varnish.
